Europäisches Patentamt

European Patent Office

Office européen des brevets

(19)

(11) Numéro de publication : **0 359 626 B1**

(12) **FASCICULE DE BREVET EUROPEEN**

(45) Date de publication du fascicule du brevet :
20.01.93 Bulletin 93/03

(51) Int. Cl.⁵ : **F16J 15/02**

(21) Numéro de dépôt : **89402422.3**

(22) Date de dépôt : **06.09.89**

(54) **Joint d'étanchéité métallique à pression spécifique très élevée.**

(30) Priorité : **08.09.88 FR 8811727**

(43) Date de publication de la demande :
**21.03.90 Bulletin 90/12**

(45) Mention de la délivrance du brevet :
**20.01.93 Bulletin 93/03**

(84) Etats contractants désignés :
**BE CH DE ES GB IT LI NL**

(56) Documents cités :
**EP-A- 0 148 088**
**US-A- 3 325 892**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Fages, Jean
Lotissement Les Portes de Provence
F-26700 Pierrelatte (FR)**
Inventeur : **De Villepoix, Raymond
4 Chemin de Combelonge
F-26290 Donzère (FR)**
Inventeur : **Abbès, Claude
5 rue Montée du Crêt du Loup
F-42029 Saint Etienne (FR)**
Inventeur : **Rouaud, Christian
4 Lotissement Les Yuccas 2
F-07700 Bourg Saint Andéol (FR)**

(74) Mandataire : **Mongrédien, André et al
c/o BREVATOME 25, rue de Ponthieu
F-75008 Paris (FR)**

EP 0 359 626 B1

**Description**

L'invention concerne un joint d'étanchéité métallique dont la conception originale lui confère une pression spécifique très élevée, pour un effort de serrage relativement faible.

Compte tenu de leur insensibilité au fluide corrosif, de leur bon comportement à haute et basse température et de leur bonne tenue dans le temps, les joints d'étanchéité métalliques sont utilisés dans des domaines d'applications très diverses parmi lesquels on citera, de façon nullement limitative, les industries chimique, pétrolière et nucléaire, ainsi que les secteurs automobile et spatial.

La qualité de l'étanchéité procurée par un joint d'étanchéité dépend notamment de la pression spécifique $P_{sp}$ développée entre les surfaces en contact du joint et des brides de l'assemblage dans lequel ce joint est placé. Au cours du serrage initial de l'assemblage, la pression spécifique doit être suffisante pour permettre l'adaptation du joint aux aspérités de surfaces des brides. De plus, lorsque l'installation dans laquelle est situé cet assemblage est en service, la relation R suivante doit toujours être satisfaite :

$$P_{sp} > m \times P$$

où m représente le coefficient de serrage du joint, c'est-à-dire le rapport (toujours supérieur à 1) entre la pression minimale de serrage du joint et la pression du fluide intérieur lorsque l'installation est en service ; et où P représente la pression du fluide intérieur lorsque l'installation est en service.

Il est donc clair que la valeur de la pression spécifique $P_{sp}$ doit être aussi élevée que possible pour que l'assemblage reste étanche à pression intérieure P élevée.

Une autre caractéristique importante des joints d'étanchéité concerne l'effort de serrage qui doit être appliqué sur l'assemblage afin d'obtenir l'étanchéité. Dans de nombreuses applications, il est important que cet effort reste relativement faible. Cela est notamment le cas lorsque l'assemblage est peu accessible et rend difficile la manipulation des outils de serrage (industrie nucléaire par exemple) et lorsque les assemblages en matériaux à hautes caractéristiques doivent être allégés et ne supportent pas des efforts élevés (industries aéronautique et spatiale par exemple).

Dans l'état actuel de la technique, les joints d'étanchéité métalliques qui sont conçus pour être mis en place avec un effort de serrage relativement faible comportent toujours, dans les parties qui sont en contact avec les surfaces en vis-à-vis des brides, un revêtement ou enveloppe extérieure en métal ductile plus ou moins épais. Lors de l'application d'un effort de serrage relativement faible, ce métal se déforme au-delà de sa limite élastique et assure l'étanchéité de l'assemblage. Parmi les joints d'étanchéité métalliques présentant cette configuration, on citera notamment les joints massifs à section en forme de K, de V ou de U, ainsi que les joints Hélicoflex (marque déposée), qui sont des joints de forme torique comportant une âme métallique élastique constituée par un ressort à spires jointives et une ou plusieurs enveloppes métalliques et dont l'enveloppe extérieure est réalisée en un métal ductile.

On observera cependant que la présence d'une enveloppe en métal ductile dans les parties de ces joints qui sont en contact avec le surfaces des brides a pour effet d'accroître de façon sensible les surfaces en contact du joint et des brides lors de l'application de l'effort de serrage. La pression spécifique développée entre ces surfaces reste donc relativement réduite. Par conséquent, compte tenu de la relation, mentionnée précédemment, que doit satisfaire la pression spécifique pour assurer une étanchéité satisfaisante de l'assemblage en service, on comprend que ce type de joints ne peut pas être utilisé lorsque la pression du fluide intérieur est trop élevée.

Par ailleurs, les propriétés mécaniques des métaux ductiles constituant l'enveloppe extérieure de ces joints existants sont altérées lorsque la température devient trop élevée.

Cet état de la technique est illustré notamment par le document FR-A-2 557 662, qui concerne un joint Hélicoflex (marque déposée) dont l'enveloppe extérieure en matériau ductile comporte une partie saillante, de section triangulaire, qui disparait complètement lorsque l'effort de serrage est appliqué sur l'assemblage.

Cette analyse de l'état de la technique montre qu'il n'existe pas, à l'heure actuelle, de joint d'étanchéité métallique avec lequel l'étanchéité puisse être obtenue en appliquant un effort de serrage relativement faible (environ 10 daN/mm par exemple), et qui soit apte à garantir l'étanchéité de l'assemblage à température et/ou à pression élevées.

La présente invention a précisément pour objet un joint d'étanchéité métallique d'un type nouveau, dont la conception originale lui permet à la fois de garantir l'étanchéité de l'assemblage pour un effort de serrage modéré et de conserver cette étanchéité à haute température et à pression élevée.

Selon l'invention, ce résultat est obtenu au moyen d'un joint d'étanchéité métallique comprenant une âme métallique élastique présentant en section, lorsqu'elle est au repos, la forme d'un cercle, et au moins une enveloppe métallique extérieure dans laquelle est encastrée l'âme métallique et sur laquelle sont formées deux parties saillantes diamétralement opposées, dont les bords périphériques sont aptes à venir en contact étanche avec deux surfaces en vis-à-vis sous l'effet d'un effort de serrage déterminé, caractérisé par le fait que l'enveloppe extérieure comportant les parties saillantes est réalisée en un matériau métallique dur travaillant très localement dans le domaine plastique lorsque ledit effort de serrage est appliqué, et par le fait que le bord périphérique de chacune des parties saillantes a une largeur au plus égale à environ 0,05 mm, après application dudit effort de serrage.

Dans un joint d'étanchéité ainsi réalisé, la surface de contact entre le joint et les brides de l'assemblage est réduite pratiquement à une ligne circonférentielle, ce qui permet de garantir l'étanchéité de l'assemblage pour un effort de serrage relativement faible, bien que l'enveloppe extérieure du joint soit réalisée en un métal dur. De plus, la réduction importante de la surface de contact par rapport aux joints existants permet, pour un même effort de serrage, d'obtenir une pression spécifique beaucoup plus élevée (par exemple, multipliée par 10). Il en résulte que l'assemblage peut supporter une pression de fluide augmentée dans les mêmes proportions. En outre, la réalisation de l'étanchéité au moyen d'un métal dur travaillant très localement au-delà de sa limite élastique permet au joint de supporter des températures très élevées (environ 800°C), étant donné que les propriétés mécaniques de l'enveloppe extérieure ainsi constituée ne sont pas altérées dans le reste de la section.

De préférence, le métal dur de l'enveloppe extérieure est choisi dans le groupe comprenant l'acier inoxydable, le nickel, le tantale et l'inconel.

Avantageusement, les parties saillantes présentent en section une forme approximativement triangulaire, de hauteur au plus égale à environ 0,06 mm et ces parties saillantes sont réalisées dans l'enveloppe extérieure par enlèvement de matière.

Selon un autre aspect intéressant de l'invention, l'enveloppe extérieure comporte une ouverture périphérique tournée vers l'extérieur du joint et décalée, par exemple, d'un angle compris entre environ 15° et environ 40°, par rapport à un plan médian du joint. Cette caractéristique permet un positionnement précis du joint lorsque celui-ci doit être logé dans une gorge formée dans l'une des brides, en contact avec le bord périphérique extérieur de cette gorge.

Un exemple de réalisation d'un joint d'étanchéité métallique selon l'invention va à présent être décrit, à titre d'exemple non limitatif, en se référant aux dessins annexés dans lesquels :

- la figure 1 est une vue en coupe transversale représentant une partie d'un joint d'étanchéité métallique réalisé conformément à l'invention ;
- la figure 2 est une vue à plus grande échelle représentant, en coupe transversale, l'une des parties saillantes du joint de la figure 1 ; et
- la figure 3 est une vue en coupe transversale représentant le joint de la figure 1, après son montage et son serrage dans un assemblage.

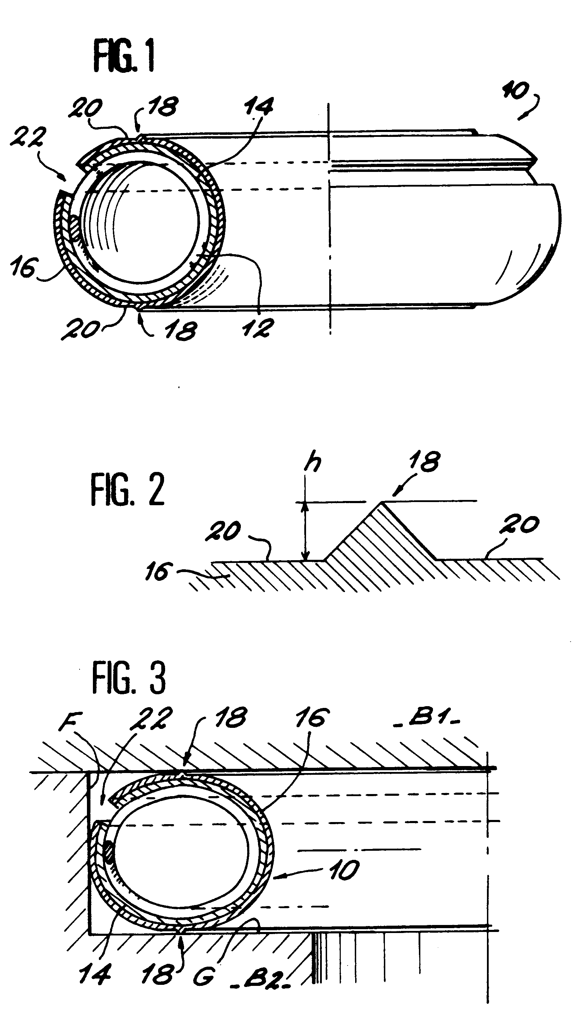

Le joint d'étanchéité métallique selon l'invention est désigné de façon générale par la référence 10 sur la figure 1. Il comprend de façon connue une âme métallique élastique présentant, lorsqu'elle est au repos, la forme d'un tore. Cette âme élastique est constituée par un ressort métallique hélicoïdal 12, à spires jointives, refermé sur lui-même. La section du fil constituant ce ressort peut être quelconque et notamment circulaire, rectangulaire ou en segment de cercle. Cette âme métallique centrale confère au joint son élasticité.

Dans le mode de réalisation représenté, le ressort 12 est encastré dans une première enveloppe 14, elle-même encastrée dans une enveloppe extérieure 16. La première enveloppe 14 est réalisée en un matériau métallique dont la fonction principale est de répartir la charge au niveau de chaque sommet de spire du ressort, de façon connue. En revanche, l'enveloppe extérieure 16 est réalisée conformément à l'invention d'une façon totalement originale, qui va à présent être décrite en se référant successivement aux figures 1 et 2.

De façon essentielle, au lieu d'être réalisée en un matériau métallique ductile comme dans les joints existants, l'enveloppe extérieure 16 est réalisée selon l'invention en un matériau métallique dur, choisi de telle sorte que ce matériau travaille très localement dans le domaine plastique lorsqu'il est serré dans un assemblage. Avantageusement, ce matériau peut être de l'acier inoxydable, du nickel, du tantale ou de l'inconel.

De plus, deux parties saillantes 18 sont réalisées en des emplacements diamétralement opposés sur toute la périphérie de l'enveloppe extérieure 16, ces emplacements étant disposés symétriquement par rapport au plan de symétrie médian du joint. Ainsi, lorsque ce dernier est placé entre les deux brides d'un assemblage, il vient en appui sur les faces en vis-à-vis des brides seulement par les extrémités des parties saillantes 18, comme l'illustre la figure 3.

Les deux parties saillantes 18 du joint 10 sont parfaitement identiques et leurs formes et leurs dimensions vont à présent être décrites plus en détail en se référant à la figure 2.

Comme l'illustre cette figure, chacune des parties saillantes 18 présente en section la forme d'un triangle isocèle dont l'angle au sommet est approximativement un angle droit est dont la hauteur h est au plus égale à environ 0,06 mm et au moins égale à environ 0,04 mm. Avantageusement et comme le montre bien la figure 1, les parties saillantes 18 sont réalisées directement par usinage avec enlèvement de matière, dans l'épaisseur même de l'enveloppe extérieure 16.

Comme le montre aussi la figure 2, cet usinage est réalisé de telle sorte que les parties saillantes 18 fassent saillie au-delà d'une surface plane 20 orientée parallèlement au plan de symétrie médian du joint.

Par ailleurs, on voit sur la figure 1 qu'au lieu d'être ouvertes suivant la périphérie extérieure du joint comme c'est généralement le cas dans les joints existants, les enveloppes 14 et 16 comportent des ouvertures périphériques 22 qui sont tournées vers l'extérieur du joint mais qui sont décalées par rapport au plan de symétrie médian de ce dernier. De façon plus précise, les bords des ouvertures 22 des enveloppes 14 et 16 joint sont avantageusement décalés respectivement d'environ 15° et d'environ 40° par rapport au plan de symétrie médian précité.

Sur la figure 3, on a représenté le joint 10 selon l'invention placé dans un assemblage comportant principalement deux brides B1 et B2 représentées seulement partiellement et des moyens de serrage d'un type quelconque connu (non représentés). L'une des brides (B2 sur la figure 3) comporte une gorge G dans laquelle est logé le joint 10 et dont la profondeur est légèrement inférieure à l'épaisseur de ce dernier.

Les matériaux constituant les brides B1 et B2 sont adaptés aux matériaux constituant l'enveloppe extérieure 16 du joint, afin d'éviter les phénomènes de marquage. En particulier la dureté des matériaux dans laquelle sont réalisées les brides est toujours supérieure à celle du matériau dans lequel est réalisée l'enveloppe extérieure 16 du joint.

A titre d'exemple nullement limitatif, si l'enveloppe extérieure 16 du joint est réalisée en acier inoxydable de dureté HV 150, les brides B1 et B2 peuvent être réalisées en acier inoxydable galeté de dureté HV 200. De même, on utilisera des brides en inconel traité de dureté HV 300 si l'enveloppe extérieure 16 du joint est réalisée en inconel 600 de dureté HV 170.

Comme le montre la figure 3, lorsque le joint d'étanchéité 10 est placé dans la gorge G de la bride B2 et qu'un effort de serrage relativement faible, par exemple d'environ 10 daN/mm, est appliqué entre les brides B1 et B2, la dureté du matériau constituant l'enveloppe extérieure 16 du joint permet à ce dernier de conserver ses parties saillantes 18. Sous l'effet du matage consécutif à l'application de l'effort de serrage, la hauteur h des saillants diminue d'environ 0,02 mm et la largeur du bord périphérique extérieur de chacun des saillants est comprise entre 0,02 mm et 0,05 mm.

Pendant toute la durée d'utilisation de l'assemblage, les surfaces de contact entre le joint et les surfaces planes en vis-à-vis des brides B1 et B2 sont donc limitées à une surface annulaire dont la largeur est au plus égale à environ 0,05 mm et au moins égale à environ 0,02 mm. Ainsi, et pour un effort de serrage d'environ 10 daN/mm, la pression spécifique développée sur les surfaces en contact entre le joint et les brides est d'environ 200 daN/mm² si ces surfaces en contact ont une largeur d'environ 0,05 mm. Une telle pression spécifique permet de garantir l'étanchéité de l'assemblage en fonctionnement pour des pressions de fluide intérieur très élevées.

Par ailleurs, la nature du métal constituant l'enveloppe extérieure 16 permet, pour la pression de serrage de l'assemblage citée précédemment, de maintenir ce matériau très localement au-dessus de sa limite élastique. Par conséquent, les propriétés mécaniques de ce matériau dans le reste de la section ne sont pas altérées jusqu'à des températures très élevées, par exemple voisines de 800°C. Le joint d'étanchéité métallique selon l'invention permet donc également de garantir une parfaite étanchéité, même à températures très élevées. Des essais à 800°C réalisés sur un joint selon l'invention comportant un revêtement extérieur en inconel 600, associé à des brides en inconel 718, ont confirmé que la hauteur des parties saillantes reste pratiquement inchangée à cette température.

Par rapport aux joints métalliques à section en K, en V, en U ou en C, dont la section non symétrique a pour effet de provoquer un léger glissement radial et une légère rotation des parties des joints en contact avec les brides lors du serrage, le joint selon l'invention a aussi pour avantage de n'entraîner aucun déplacement parasite radial des parties saillantes 18 par rapport aux brides, en raison de la symétrie présentée en section par l'âme élastique du joint.

En se référant à nouveau à la figure 3, il est important de noter que l'orientation particulière des ouvertures 22 des enveloppes 14 et 16 du joint décrite précédemment permet un appui parfait du bord périphérique extérieur du joint sur le flanc extérieur F de la gorge G dans laquelle ce joint est logé, sous l'effet d'une forte pression intérieure agissant sur ce dernier. En effet, la position de l'ouverture 22 permet de déterminer avec une très grande précision le diamètre extérieur du joint, par rapport au diamètre extérieur de la gorge, dans le cas d'un joint utilisé sous haute pression.

Un tel résultat ne serait pas obtenu avec les joints existants dans lesquels l'ouverture des enveloppes est formée au niveau du plan de symétrie médian du joint, de sorte que l'appui du joint sur le flanc extérieur de la gorge est assuré par les bords de cette ouverture. En outre, la pression intérieure risquerait alors de faire glisser vers l'extérieur le ressort 12 à l'intérieur des enveloppes, ce qui conduirait à un déplacement de l'effort de réaction sur les surfaces de contact entre le joint et les brides et pourrait conduire à la création d'une fuite.

Bien entendu, l'invention n'est pas limitée au mode de réalisation qui vient d'être décrit à titre d'exemple, mais en couvre toutes les variantes. En particulier, le joint selon l'invention peut prendre une forme quelconque (rectangulaire, circulaire, oblongue, triangulaire, ovale, etc.) selon l'application envisagée. De plus, le ressort hélicoïdal constituant l'âme élastique du joint dans l'exemple de réalisation décrit peut dans certains cas être remplacé par un tube métallique. L'enveloppe intérieure peut alors être supprimée.

## Revendications

1. Joint d'étanchéité métallique comprenant une âme métallique élastique (12) présentant en section, lorsqu'elle est au repos, la forme d'un cercle, et au moins une enveloppe métallique extérieure (16) dans laquelle est encastrée l'âme métallique et sur laquelle sont formées deux parties saillantes (18) et diamétralement opposées, dont les bords périphériques sont aptes à venir en contact étanche avec deux surfaces en vis-à-vis sous l'effet d'un effort de serrage déterminé, caractérisé par le fait que l'enveloppe extérieure (16) comportant les parties saillantes (18) est réalisée en un matériau métallique dur travaillant très localement dans le domaine plastique lorsque ledit effort de serrage est appliqué, et par le fait que le bord périphérique de chacune des parties saillantes (18) a une largeur au plus égale à environ 0,05 mm, après application dudit effort de serrage.

2. Joint d'étanchéité selon la revendication 1, caractérisé par le fait que le matériau métallique dur de l'enveloppe extérieure (16) est choisi dans le groupe comprenant l'acier inoxydable, le nickel, le tantale et l'inconel.

3. Joint d'étanchéité selon l'une quelconque des revendications 1 et 2, caractérisé par le fait que les parties saillantes (18) présentent en section une forme approximativement triangulaire, de hauteur au plus égale à environ 0,06 mm.

4. Joint d'étanchéité selon l'une quelconque des revendications 1 à 3, caractérisé par le fait que les parties saillantes (18) sont réalisées dans l'enveloppe extérieure (16) par enlèvement de matière.

5. Joint d'étanchéité selon l'une quelconque des revendications 1 à 4, caractérisé par le fait que les parties saillantes (18) sont conservées en fonctionnement en haute pression et haute température et assurent l'étanchéité en maintenant la pression spécifique élevée obtenue au serrage de l'assemblage.

6. Joint d'étanchéité selon l'une quelconque des revendications 1 à 5, caractérisé par le fait que l'enveloppe extérieure (16) comporte une ouverture périphérique (22) tournée vers l'extérieur du joint et décalée par rapport à un plan de symétrie médian de ce dernier.

7. Joint d'étanchéité selon la revendication 5, caractérisé par le fait que ladite ouverture périphérique (22) est décalée d'un angle compris entre environ 15° et environ 40° par rapport au plan de symétrie médian du joint.

## Patentansprüche

1. Metalldichtung, einen elastischen metallischen Kern (12) enthaltend, der in Ruhestellung einen kreisförmigen Querschnitt aufweist, und wenigstens eine äußere metallische Hülle (16) enthält, in die der metallische Kern eingelassen ist und auf der zwei überstehende und diametral entgegengesetzte Teile (18) ausgebildet sind, deren periphere Ränder geeignet sind, einen dichten Kontakt herzustellen mit zwei einander gegenüberliegenden Flächen unter der Einwirkung einer bestimmten Klemmkraft,
dadurch **gekennzeichnet,**
daß die äußere Hülle (16), welche die überstehenden Teile (18) aufweist, ausgeführt ist aus einem harten metallischen Werkstoff, der örtlich hoch im plastischen Bereich arbeitet, wenn die genannte Klemmkraft angewandt wird, und dadurch, daß der periphere Rand eines jeden der überstehenden Teile (18) eine Breite von maximal ca. 0,05 mm hat, nach Anwendung der genannten Klemmkraft.

2. Dichtung nach Anspruch 1, dadurch gekennzeichnet, daß der harte metallische Werkstoff der äußeren Hülle (16) ausgesucht wird aus der Gruppe, die nichtoxidierbaren Stahl, Nickel, Tantal und Inconel enthält.

3. Dichtung nach einem der Ansprüche 1 und 2, dadurch gekennzeichnet, daß die überstehenden Teile (18) im Querschnitt eine anähernd dreieckige Form aufweisen, mit einer Höhe von maximal ca. 0,06 mm.

4. Dichtung nach einem der Ansprüche 1 bis 3, dadurch gekennzeichnet, daß die überstehenden Teile (18) in der äußeren Hülle (16) entstanden sind durch Abtragen von Werkstoff.

5. Dichtung nach einem der Ansprüche 1 bis 4, dadurch gekennzeichnet, daß die überstehenden Teile (18) ihre Funktion bewahren bei hohem Druck und hoher Temperatur und die Dichtheit gewährleisten durch Beibehaltung des beim Zusammenbau erreichten erhöhten spezifischen Drucks.

6. Dichtung nach einem der Ansprüche 1 bis 5, dadurch gekennzeichnet, daß die äußere Hülle (16) eine periphere Öffnung aufweist (22), die an der Dichtung nach außen gerichtet ist und versetzt ist, bezogen auf eine Symetiemittelebene dieser letzteren.

7. Dichtung nach Anspruch 5, dadurch gekennzeichnet, daß die genannte periphere Öffnung (22) versetzt ist um einen Winkel zwischen ungefähr 15° und ungefähr 40°, bezogen auf die Symetriemittelebene der Dichtung.

**Claims**

1. Metal gasket comprising an elastic metal core (12) presenting when at rest a section with the shape of a circle, and at least one outer metallic casing (16) in which embedded is the metallic core and on which formed are two diametrical projecting portions (18) whose peripheral edges are suitable for coming into sealed contact with two opposite surfaces under the effect of a determined gripping power, characterized in that the outer casing (16) comprising the projecting sections (18) is made of a hard metallic material working extremely locally in the plastics field when said gripping power is applied and whereby the peripheral edge of each of the projecting sections has a width at the most equal to about 0.05 mm after said gripping power has been applied.

2. Gasket according to claim 1, characterized in that the hard metallic material of the outer casing is selected from the group comprising stainless steel, nickel, tantalum and inconel.

3. Gasket according to either of the claims 1 and 2, characterized in that the projecting sections (18) have a section with roughly a triangular shape whose height is at the most equal to about 0.06 mm.

4. Gasket according to any one of the claims 1 to 3, characterized in that the projecting sections (18) are embodied in the outer casing (16) by removing a certain amount of material.

5. Gasket according to any one of the claims 1 to 4, characterized in that the projecting sections (18) are kept functioning at high pressure and at a high temperature and ensure imperviousness by retaining the high unit-area pressure obtained on tightening of the assembly.

6. Gasket according to any one of the claims 1 to 5, characterized in that the outer casing (16) comprises a peripheral opening (22) oriented outside the joint and offset with respect to a median plane of symmetry of the latter.

7. Gasket according to claim 5, characterized in that said peripheral opening (22) is offset by an angle of between about 15° and about 40° with respect to the median plane of symmetry of the joint.

## FIG. 1

## FIG. 2

## FIG. 3